# DEMANDE DE BREVET EUROPEEN

(11) **EP 4 844 969 A1**
(43) Date de publication de la demande: **25.11.2026**
(21) Numéro de dépôt: 26178644.6
(22) Date de dépôt: 13.05.2026
(51) Int. Cl.: H02J 1/08, H02J 3/001, H02J 4/00, H05K 7/14

(54) **CARTE DE PROTECTION POUR L'ALIMENTATION ÉLECTRIQUE D'UN ENSEMBLE DE CHARGES ÉLECTRIQUES D'UN AERONEF**

(30) Priorité: 22.05.2025 FR 2505486
(71) Demandeur: AIRBUS OPERATIONS (S.A.S), 31060 Toulouse (FR)
(72) Inventeur: KERBILA, Ramzi, 31060 Toulouse (FR); MASETTI, Damien, 31060 Toulouse (FR)
(74) Mandataire: Gevers & Orès

(57) **Abrégé**

- Carte de protection pour l'alimentation électrique d'un ensemble de charges électriques d'un aéronef.
- La carte de protection (2) comprend un ensemble de liaisons électriques (L1, ..., LN) pour relier une source d'alimentation (4) électrique à un ensemble de charges électriques (3), et un ensemble de protections électriques (P1, ..., PN), chacune des liaisons électriques (L1, ..., LN) étant équipée d'une des protections électriques (P1, ..., PN) et d'un point de connexion (A1, ..., AN) agencé entre la protection électrique (P1, ..., PN) et une sortie de protection (SP1, ..., SPN) de la liaison électrique (L1, ..., LN) considérée, les points de connexion (A1, ..., AN) étant aptes à être connectés électriquement entre eux de manière à relier au moins deux des sorties de protection (S1P, ..., SPN) entre elles, la carte de protection (2) permettant de réaliser un gain économique en conception et en fabrication en étant facilement adaptable en fonction des caractéristiques des charges électriques (3) à alimenter.

## Description

### Domaine technique

La présente invention concerne une carte de protection pour l'alimentation électrique d'un ensemble de charges électriques d'un aéronef, ainsi qu'un système d'alimentation électrique comprenant une telle carte de protection.

### Etat de la technique

Un aéronef tel qu'un avion de transport comporte un certain nombre d'appareils électriques et électroniques répartis sur l'ensemble de l'aéronef et nécessitant d'être alimentés en électricité. Ces appareils, ci-après appelés « charges électriques », peuvent correspondre, par exemple, à des calculateurs, des actionneurs, des écrans, des lampes, des sièges électriques de cabine, etc. Ces charges électriques sont alimentées par un système d'alimentation électrique de l'aéronef comprenant une ou plusieurs sources d'alimentation électrique telles que des générateurs électriques entraînés par les moteurs de l'aéronef, ou des batteries.

Des protections électriques sont prévues pour limiter l'intensité du courant délivré à chacune des charges électriques. Ces protections électriques peuvent correspondre à des disjoncteurs, en particulier des disjoncteurs de type statiques à semi-conducteurs (aussi appelés SSPC pour « Solid State Power Controller » en anglais). Les protections électriques associées à un ensemble de charges électriques sont généralement regroupées sous la forme d'une carte de protection comprenant un circuit imprimé supportant ces protections électriques.

Les charges électriques installées dans un aéronef présentent des calibres électriques variés. Chaque protection électrique doit donc présenter un calibre électrique adapté à la charge électrique à laquelle ladite protection électrique est associée. En conséquence, le système d'alimentation d'un aéronef doit comporter des cartes de protection de types différents, supportant des protections électriques présentant des calibres électriques variés adaptés aux charges électriques à alimenter.

Cela a pour effet de rendre les cartes de protection coûteuses puisqu'il est nécessaire de prévoir la fabrication d'une multitude de références de cartes de protection avec des configurations variées permettant de s'adapter à la configuration spécifique des charges électriques de chaque aéronef. En général, un aéronef comprend plusieurs centaines de charges électriques de toutes sortes, ce qui implique de prévoir plusieurs dizaines de cartes de protection avec des configurations variées. En outre, cela complexifie également la maintenance des aéronefs puisque les sociétés de maintenance doivent détenir de multiples références de cartes de protection.

Les cartes de protection usuelles pour l'alimentation électrique des charges électriques d'un aéronef ne sont donc pas complètement satisfaisantes.

### Exposé de l'invention

La présente invention a pour objet de remédier aux inconvénients précités. Elle concerne une carte de protection pour l'alimentation électrique d'un ensemble de charges électriques d'un aéronef, ladite carte de protection comprenant moins :
- un ensemble de liaisons électriques configurées pour relier une source d'alimentation électrique à l'ensemble de charges électriques, les liaisons électriques étant montées en parallèle entre une entrée de la carte de protection destinée à être connectée à la source d'alimentation électrique et des sorties de protection de la carte de protection destinées à être connectées à l'ensemble de charges électriques ; et
- un ensemble de protections électriques, chacune des liaisons électriques étant équipée d'au moins l'une desdites protections électriques.

Selon l'invention, chaque liaison électrique de la carte de protection est équipée d'au moins un point de connexion agencé entre la protection électrique et la sortie de protection de la liaison électrique considérée, les points de connexion étant aptes à être connectés électriquement entre eux de manière à relier au moins deux des sorties de protection de la carte de protection entre elles.

Ainsi, grâce à l'invention, on dispose de cartes de protection qui présentent une seule et même architecture globale prédéfinie et qui peuvent être facilement et à moindre coût adaptées via les points de connexion agencés de manière avantageuse, ce qui permet d'obtenir des cartes de protection avec des calibres électriques souhaités pour alimenter des charges électriques, en particulier des charges électriques d'un aéronef, et ainsi de réaliser un gain économique significatif, notamment en termes de conception et de fabrication des cartes de protection.

Avantageusement, l'ensemble des protections électriques équipant l'ensemble des liaisons électriques de la carte de protection sont de type statique à semi-conducteurs.

Avantageusement, la carte de protection comprend, en outre, un ensemble de dispositifs de sécurité, au moins l'un des dispositifs de sécurité étant associé à chacune des protections électriques, le dispositif de sécurité associé à une protection électrique étant redondant de ladite protection électrique.

Dans un mode de réalisation particulier, l'ensemble des protections électriques équipant l'ensemble des liaisons électriques de la carte de protection présentent, toutes, le même calibre électrique.

Dans un autre mode de réalisation particulier, l'ensemble des protections électriques équipant l'ensemble des liaisons électriques de la carte de protection comprennent au moins deux protections électriques présentant des calibres électriques différents.

En outre, de façon avantageuse, la carte de protection comprend au moins un circuit électronique de gestion configuré pour gérer au moins une configuration de l'ensemble de protections électriques.

Dans un mode de réalisation particulier, le circuit électronique de gestion est destiné à être relié à un calculateur avionique de l'aéronef, le circuit électronique de gestion étant configuré pour échanger des informations relatives à la configuration de l'ensemble de protections électriques avec ledit calculateur avionique.

La présente invention concerne également un système d'alimentation électrique d'un ensemble de charges électriques d'un aéronef.

Selon l'invention, le système d'alimentation électrique comprend au moins une source d'alimentation électrique et au moins une carte de protection telle que décrite ci-dessus, configurée pour relier ladite source d'alimentation électrique à l'ensemble de charges électriques.

La présente invention concerne également un aéronef comprenant un ensemble de charges électriques.

Selon l'invention, l'aéronef comprend au moins un système d'alimentation électrique tel que décrit ci-dessus, configuré pour alimenter l'ensemble de charges électriques.

### Brève description des figures

Les figures annexées feront bien comprendre comment l'invention peut être réalisée. Sur ces figures, des références identiques désignent des éléments semblables.
La figure 1 est une vue schématique d'un système d'alimentation électrique comprenant une carte de protection selon un mode de réalisation particulier.
La figure 2 est une vue schématique d'un premier exemple de configuration de la carte de protection de la figure 1 pourvue de cinq liaisons électriques.
La figure 3 est une vue schématique d'un second exemple de configuration la carte de protection de la figure 1 pourvue de cinq liaisons électriques.
La figure 4 est une vue schématique d'un aéronef équipé d'un système d'alimentation électrique comprenant une carte de protection.

### Description détaillée

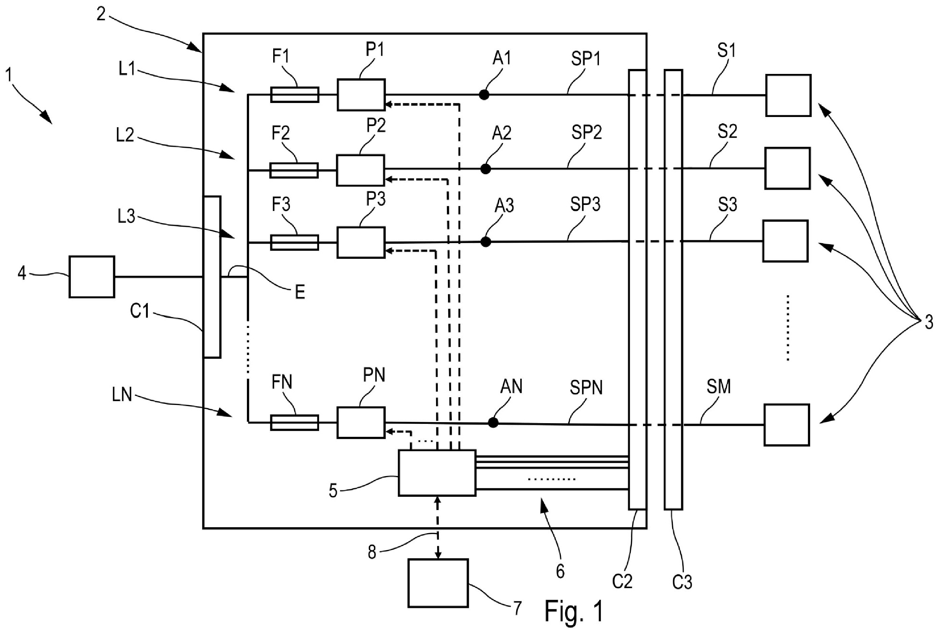

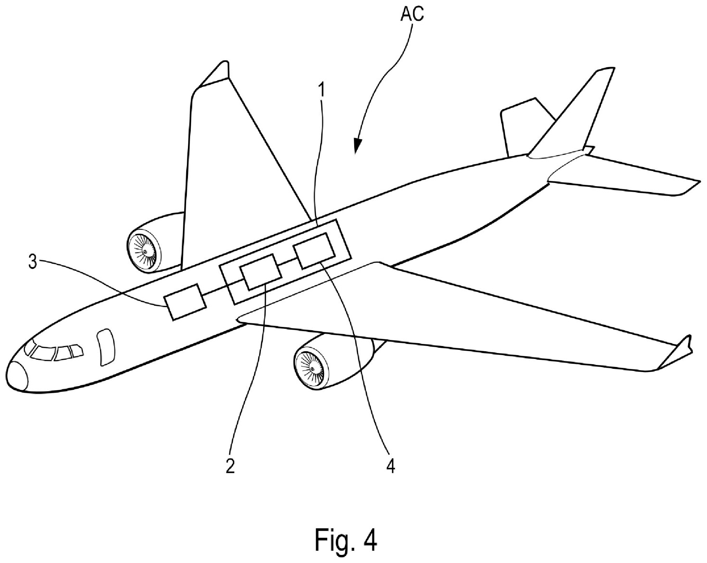

Le système d'alimentation 1 électrique représenté schématiquement de la figure 1 à la figure 3 dans des modes de réalisation particuliers, est destiné à alimenter électriquement un ensemble de charges électriques 3. En particulier, il peut s'agir de charges électriques 3 d'un aéronef AC, par exemple un avion de transport de passagers, comme représenté schématiquement sur la figure 4. Par « charges électriques », on entend tout appareil électrique ou électronique, tel que des calculateurs avioniques, des actionneurs électriques, des écrans d'affichage, des lampes, des sièges de cabine, etc. Le système d'alimentation 1 peut être intégré dans une baie avionique de l'aéronef AC.

Le système d'alimentation 1 comprend au moins une source d'alimentation 4 électrique configurée pour alimenter électriquement les charges électriques 3. La source d'alimentation 4 peut correspondre, par exemple, à un générateur électrique ou à une batterie électrique.

De plus, le système d'alimentation 1 comprend au moins une carte de protection 2 configurée pour relier la source d'alimentation 4 aux charges électriques 3. La carte de protection 2 peut correspondre à un circuit imprimé usuel. La carte de protection 2 permet, entre autres, de protéger les charges électriques 3 en limitant l'intensité du courant électrique délivré à chacune desdites charges électriques 3. La carte de protection 2 est particulière en ce qu'elle présente une architecture facilement adaptable à des configurations de charges électriques 3 variées, comme expliqué ci-dessous.

Comme représenté sur la figure 1, la carte de protection 2 comprend un ensemble de liaisons électriques L1 à LN, N étant un entier supérieur à 1. Les liaisons électriques L1 à LN sont montées en parallèle entre une entrée E et des sorties de protection SP1 à SPN de la carte de protection 2. De plus, la carte de protection 2 comprend un ensemble de protections P1 à PN équipant les liaisons électriques L1 à LN. Plus précisément, chacune des liaisons électriques L1 à LN est équipée d'au moins l'une des protections P1 à PN. Dans les exemples représentés de la figure 1 à la figure 3, chacune des liaisons électriques L1 à LN est équipée d'une seule des protections P1 à PN.

Dans un mode de réalisation préféré, les protections P1 à PN correspondent à des protections de type statique à semi-conducteurs, par exemple des semi-conducteurs de types MOSFET (pour « Metal Oxyde Semiconductor Field Effect Transistor » en anglais). Ce type de protections, également appelées SSPC (pour « Solid State Power Controller » en anglais), est plus performant que des disjoncteurs classiques puisqu'elles sont plus fiables et plus rapides. Elles sont donc particulièrement adaptées à des applications avec des exigences de sécurité élevées comme dans un aéronef.

Dans le mode de réalisation représenté sur la figure 1, la source d'alimentation 4 est connectée à l'entrée E de la carte de protection 2 par l'intermédiaire d'un premier connecteur C1. Les sorties de protection SP1 à SPN de la carte de protection 2, quant à elles, sont connectées à un deuxième connecteur C2.

En outre, toujours dans le mode de réalisation de la figure 1, le système d'alimentation 1 comprend un ensemble de liaisons de sortie S1 à SM pour relier les charges électriques 3 à la carte de protection 2, M étant un entier inférieur ou égal à N. En effet, comme expliqué ci-après, une même charge électrique peut être reliée à plusieurs sorties de protection. Aussi, selon l'application considérée, le nombre M de liaisons de sortie S1 à SM peut être inférieur au nombre de sorties de protection S1 à SN.

La liaison entre la carte de protection 2 et l'ensemble de charges électriques 3 est réalisée par l'intermédiaire d'un troisième connecteur C3. Chacune des charges électriques 3 est reliée au connecteur C3 par une des liaisons de sortie S1 à SM. Le connecteur C3 est configuré pour coopérer avec le connecteur C2 afin de relier les charges électriques 3 à la carte de protection 2. La coopération entre les connecteurs C2 et C3, à savoir les liaisons entre les sorties de protection SP1 à SPN et les liaisons de sortie S1 à SM, est représentée schématiquement sur la figure 1, la figure 2 et la figure 3 par des tirets. Les charges électriques 3 peuvent être reliées au connecteur C3 de manière usuelle par le biais d'un harnais électrique (non représenté).

Chacune des protections P1 à PN présente un calibre électrique correspondant à un seuil d'intensité de courant au-delà duquel lesdites protections P1 à PN se déclenchent de manière à couper l'alimentation électrique. La carte de protection 2 peut comprendre des protections P1 à PN présentant, toutes, le même calibre électrique. La carte de protection 2 peut également comprendre des protections P1 à PN dont au moins certaines présentent des calibres électriques différents.

Selon l'application considérée, chacune des charges électriques 3 nécessite d'être alimentée avec un calibre électrique particulier. Les protections P1 à PN de la carte de protection 2 étant prédéfinies, il est possible qu'aucune desdites protections P1 à PN ne présente un calibre électrique adapté pour l'alimentation d'au moins une des charges électriques 3. Dans ce cas, le connecteur C3 peut être configuré pour connecter plusieurs sorties de protection SP1 à SPN à une même liaison de sortie S1 à SM. Relier ainsi plusieurs sorties de protection SP1 à SPN pour alimenter une même charge électrique 3 permet d'adapter la puissance électrique délivrée à ladite charge électrique 3, indépendamment de la puissance électrique pouvant être délivrée par chacune des protections P1 à PN, donc indépendamment du calibre électrique de chacune desdites protections P1 à PN. Autrement dit, en combinant plusieurs sorties de protection SP1 à SPN ensemble, on est en mesure d'obtenir un calibre électrique plus important que le calibre électrique associé à une seule des sorties de protection SP1 à SPN.

Pour relier les sorties de protections P1 à PN entre elles, chaque liaison électrique L1 à LN de la carte de protection 2 comprend au moins un point de connexion A1 à AN. Comme représenté sur la figure 1, chacun des points de connexion A1 à AN est agencé entre la protection électrique P1 à PN et la sortie de protection SP1 à SPN d'une des liaisons électriques L1 à LN. Les points de connexion A1 à AN peuvent correspondre à des « via » électriques, à savoir des trous métallisés établissant une liaison électrique entre une ou plusieurs couches de la carte de protection 2. Les points de connexion A1 à AN sont aptes à être connectés entre eux afin de relier au moins deux sorties de protection SP1 à SPN entre elles.

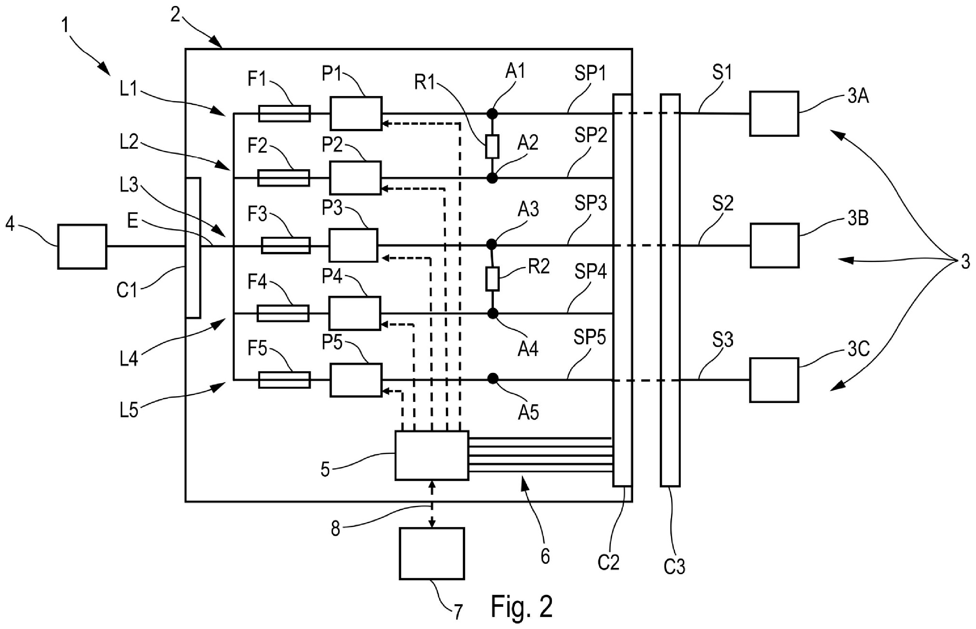

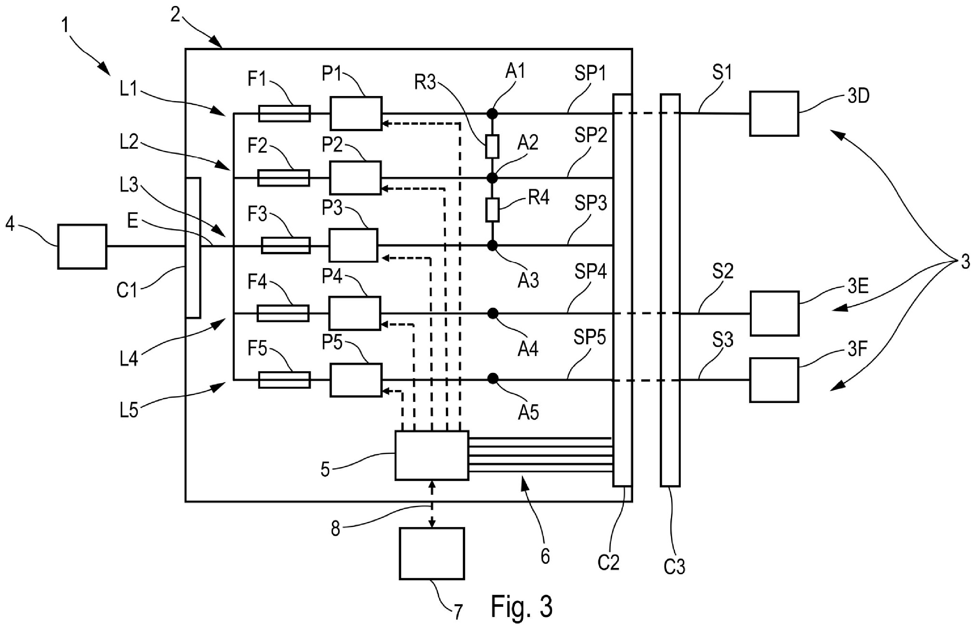

Pour ce faire, la carte de protection 2 peut comprendre des liaisons entre certains des points de connexion A1 à AN. Ces liaisons sont représentées schématiquement dans des exemples particuliers sur la figure 2 et la figure 3, par des résistances R1, R2, R3 et R4 de valeurs négligeables permettant de représenter des pistes de connexion. Ces liaisons sont réalisées lors de la fabrication de la carte de protection 2 et permettent d'obtenir la configuration souhaitée pour alimenter les charges électriques 3, comme illustré par des exemples ci-après.

On connaît par avance les caractéristiques des charges électriques 3 que l'on souhaite alimenter à l'aide de la carte de protection 2, et donc les calibres électriques des protections P1 à PN qui sont requis pour alimenter lesdites charges électriques 3. On connaît également les calibres électriques prédéfinis des protections P1 à PN équipant la carte de protection 2. Ces calibres électriques sont définis par les valeurs standards des composants choisis lors de la conception de la carte de protection 2. Ainsi, lors de la fabrication de la carte de protection 2, il est possible de simplement indiquer lesquelles des sorties de protection SP1 à SPN on souhaite relier ensemble via les points de connexion A1 à AN, afin d'obtenir les calibres électriques adaptés pour alimenter les charges électriques 3.

Cela permet d'avoir une architecture globale de la carte de protection 2 qui est la même pour toutes les cartes de protection 2. La seule différence, d'une carte à l'autre, correspond à l'ajout de connexions entre certains des points de connexion A1 à AN qui sont définies en fonction de l'application considérée (à savoir en fonction des caractéristiques des charges électriques 3 à alimenter). Cette différence, au niveau de la fabrication de la carte de protection 2, représente un coût très faible par rapport à la conception d'une nouvelle carte de protection 2 avec une architecture globale, et notamment avec de nouvelles protections P1 à PN, complètement modifiées pour s'adapter à des charges électriques 3 particulières.

Cela permet de réaliser un gain économique significatif en termes de conception et de fabrication des cartes de protection 2. De plus, cela limite le nombre de références différentes de cartes de protection 2 et donc simplifie les opérations de maintenance.

En outre, lorsqu'il y a une modification dans la configuration des charges électriques 3 à alimenter, qui nécessite de modifier également la carte de protection 2, il peut être envisageable de modifier les connexions entre les points de connexion A1 à AN afin d'adapter la carte de protection 2 à la nouvelle configuration des charges électriques 3. Par exemple, il peut être envisageable de supprimer certaines connexions entre certains des points de connexion A1 à AN et d'en ajouter de nouvelles pour obtenir de nouvelles combinaisons des sorties de protection SP1 à SPN, et donc de nouveaux calibres électriques adaptés à la nouvelle configuration des charges électriques 3.

Cela peut permettre de réaliser un gain supplémentaire en réutilisant des cartes de protection 2 plutôt que d'avoir à en fabriquer de nouvelles entièrement.

Par ailleurs, dans un mode de réalisation particulier représenté de la figure 1 à la figure 3, la carte de protection 2 comprend un ensemble de dispositifs de sécurité F1 à FN (aussi appelés « fail safe » en anglais) équipant l'ensemble des liaisons électriques L1 à LN. Plus précisément, au moins un des dispositifs de sécurité F1 à FN est associé à chacune des protections P1 à PN équipant les liaisons L1 à LN. Par « associé », on entend qu'un dispositif de sécurité est monté en série avec une protection. Les dispositifs de sécurité F1 à FN peuvent correspondre, par exemple, à des fusibles. De préférence, un seul dispositif de sécurité F1 à FN est associé à chacune des protections P1 à PN.

Les dispositifs de sécurité F1 à FN sont prévus pour se déclencher, c'est-à-dire interrompre la circulation du courant électrique, dans l'hypothèse où la protection P1 à PN à laquelle il est associé serait défaillante. Par exemple, les dispositifs de sécurité F1 à FN se déclenchent en état de court-circuit lorsque le courant circulant dans la protection P1 à PN à laquelle il est associé est supérieur à un courant maximal correspondant au calibre électrique de ladite protection. Chacun des dispositifs de sécurités F1 à FN est donc redondant de la protection P1 à PN à laquelle il est associé. Le calibre électrique des dispositifs de sécurité F1 à FN peut, notamment, être supérieur d'une marge prédéterminée au calibre électrique de la protection P1 à PN à laquelle il est associé.

En outre, comme représenté sur la figure 1, la figure 2 et la figure 3, la carte de protection 2 peut comprendre un circuit électronique de gestion 5 configuré pour gérer au moins une configuration de l'ensemble de protections P1 à PN. La gestion de la configuration des protections P1 à PN comprend notamment la gestion des protections utilisées ou non parmi lesdites protections P1 à PN ou encore la gestion de l'arrangement des liaisons de sortie S1 à SM. Dans un mode de réalisation représenté de la figure 1 à la figure 3, le circuit électronique de gestion 5 comprend des entrées de configuration 6 reliées à des broches (non représentées) du connecteur C2. Le circuit électronique de gestion 5 est apte à recevoir des signaux via les broches du connecteur C2 indiquant au moins quelles liaisons parmi les liaisons électriques L1 à LN sont utilisées ou non et quelles sorties parmi les sorties de protection SP1 à SPN sont connectées à des liaisons de sorties S1 à SM.

Dans un autre mode de réalisation représenté de la figure 1 à la figure 3, en complément ou en variante du mode de réalisation précédent, le circuit électronique de gestion 5 peut être configuré pour être relié à un calculateur avionique 7 de l'aéronef AC. Dans ce cas, le circuit électronique de gestion 5 est apte à recevoir du calculateur avionique 7 des informations relatives à la configuration de l'ensemble de protection P1 à PN. Cet échange d'informations peut être réalisé par une liaison usuelle représentée schématiquement par une flèche 8 (figure 1, figure 2, figure 3). Ainsi, en cas de remplacement de la carte de protection 2 lors d'une opération de maintenance, cela évite d'avoir à réaliser un paramétrage spécifique de la nouvelle carte de protection 2.

Dans un mode de réalisation particulier, la gestion de la configuration par le circuit électronique de gestion 5 peut comprendre, en outre, la gestion des calibres électriques des protections P1 à PN. En effet, les protections P1 à PN peuvent être configurées par logiciel à un calibre électrique inférieur à leur calibre électrique maximal. Par exemple, une protection de type statique à semi-conducteurs présentant un calibre électrique maximal de 5A peut être configurée par logiciel pour présenter un calibre électrique de 3A. Cela permet une certaine flexibilité d'utilisation des protections P1 à PN. Le calibre électrique d'une telle protection ne doit cependant pas être trop inférieur à son calibre électrique maximal afin que la sécurité apportée, le cas échant, par le dispositif de sécurité F1 à FN associé à la protection P1 à PN ne soit pas surdimensionnée.

Des exemples non limitatifs de mise en œuvre d'une carte de protection 2 telle que décrite ci-dessus, sont représentés schématiquement sur la figure 2 et la figure 3. Il s'agit de deux exemples simples permettant d'illustrer le type de configurations qu'il est possible d'obtenir grâce à la carte de protection 2.

Dans un premier exemple représenté sur la figure 2, le système d'alimentation 1 est destiné à alimenter trois charges électriques 3A, 3B et 3C. La carte de protection 2 du système d'alimentation 1 comprend cinq liaisons électriques L1, L2, L3, L4 et L5. Chacune des liaisons électriques L1, L2, L3, L4 et L5 est pourvue, respectivement, une protection P1, P2, P3, P4 et P5. Dans cet exemple particulier, on considère que les protections P1, P2, P3, P4, et P5 présentent, toutes, un même calibre électrique égal à 5A. Chacune des protections P1, P2, P3, P4 et P5 comporte, respectivement, un dispositif de sécurité F1, F2, F3, F4 et F5 qui lui est associé. De plus, chacune des liaisons électriques L1, L2, L3, L4 et L5 comprend, respectivement, un point de connexion A1, A2, A3, A4 et A5 agencé entre chacune des protections P1, P2, P3, P4 et P5 et des sorties de protection SP1, SP2, SP3, SP4 et SP5 de chacune des liaisons électriques L1, L2, L3, L4 et L5.

On considère que chacune des charges électriques 3A et 3B nécessite d'être alimentée par le biais d'une protection présentant un calibre électrique de 10A et que la charge électrique 3C nécessite d'être alimentée par le biais d'une protection présentant un calibre électrique de 5A. Les charges électriques 3A et 3B nécessitent donc d'être alimentées, chacune, par le biais de deux protections de la carte de protection 2 et la charge électrique 3C peut être alimentée par le biais d'une seule protection de la carte de protection 2.

Pour cela, la carte de protection 2 est configurée de manière à relier entre elles les sorties de protection SP1 et SP2 et à relier entre elles les sorties de protection SP3 et SP4. Une résistance R1 est agencée entre les sorties de protection SP1 et SP2 de manière à connecter électriquement entre eux les points de connexion A1 et A2. De manière analogue, une résistance R2 est agencée entre les sorties de protection SP3 et SP4 de manière à connecter électriquement entre eux les points de connexion A3 et A4.

Les combinaisons, d'une part, des sorties de protection SP1 et SP2, et d'autre part, des sorties de protection SP3 et SP4, présentent ainsi chacune un calibre électrique de 10A. Ces combinaisons sont donc adaptées pour alimenter, respectivement, les charges électriques 3A et 3B.

Pour cela, le système d'alimentation 1 comprend une liaison de sortie S1 reliée à la charge électrique 3A, une liaison de sortie S2 reliée à la charge électrique 3B et une liaison de sortie S3 reliée à la charge électrique 3C. Le connecteur C3 est configuré pour coopérer avec le connecteur C2 de sorte que la liaison de sortie S1 soit connectée à l'une ou l'autre des sorties de protection SP1 ou SP2, que la liaison de sortie S2 soit connectée à l'une ou l'autre des sorties de protection SP3 ou SP4 et que la liaison de sortie S3 soit connectée à la sortie de protection SP5. Ainsi, chacune des charges électriques 3A, 3B et 3C peut être alimentée par le biais d'une protection présentant un calibre électrique adapté, et ce, avec une modification minime de l'architecture globale de la carte de protection 2.

Dans un second exemple représenté sur la figure 3, le système d'alimentation 1 est destiné à alimenter trois charges électriques 3D, 3E et 3F. La carte de protection 2 présente une configuration similaire à celle de l'exemple de la figure 2.

Cette fois, on considère que la charge électrique 3D nécessite d'être alimentée par le biais d'une protection présentant un calibre électrique de 15A et que chacune des charges électriques 3E et 3F nécessite d'être alimentée par le biais d'une protection présentant un calibre électrique de 5A. La charge électrique 3D nécessite donc d'être alimentée par le biais de trois protections de la carte de protection 2 et chacune des charges électriques 3E et 3F peut être alimentée par le biais d'une seule protection de la carte de protection 2.

Pour cela, la carte de protection 2 est configurée de manière à relier entre elles les sorties de protection SP1, SP2 et SP3. Une résistance R3 est agencées entre les sorties de protection SP1 et SP2 de manière à connecter électriquement entre eux les points de connexion A1 et A2 et une résistance R4 est agencée entre les sorties de protection SP2 et SP3 de manière à connecter électriquement entre eux les points de connexion A2 et A3.

La combinaison des sorties de protection SP1, SP2 et SP3 permet ainsi d'obtenir une protection présentant un calibre électrique de 15A. Cette combinaison est donc adaptée pour alimenter la charge électrique 3D.

Pour cela, le système d'alimentation 1 comprend une liaison de sortie S1 reliée à la charge électrique 3D, une liaison de sortie S2 reliée à la charge électrique 3E et une liaison de sortie S3 reliée à la charge électrique 3F. Le connecteur C3 est configuré pour coopérer avec le connecteur C2 de sorte que la liaison de sortie S1 soit connectée à l'une ou l'autre des sorties de protection SP1, SP2 ou SP3, que la liaison de sortie S2 soit connectée à la sortie de protection SP4 et que la liaison de sortie S3 soit connectée à la sortie de protection SP5. Ainsi, chacune des charges électriques 3D, 3E et 3F peut être alimentée par le biais d'une protection présentant un calibre électrique adapté, et ce, avec une modification minime de l'architecture globale de la carte de protection 2.

Les deux exemples ci-dessus sont décrits à titre illustratif et d'autres types de configuration sont bien entendu envisageables pour le système d'alimentation 1 et la carte de protection 2 sans sortir du cadre de la présente invention.

## Revendications

1. Carte de protection pour l'alimentation électrique d'un ensemble de charges électriques (3) d'un aéronef (AC), ladite carte de protection (2) comprenant au moins :
- un ensemble de liaisons électriques (L1, ..., LN) configurées pour relier une source d'alimentation (4) électrique à l'ensemble de charges électriques (3), les liaison électriques (L1, ..., LN) étant montées en parallèle entre une entrée (E) de la carte de protection (2) destinée à être connectée à la source d'alimentation (4) électrique et des sorties de protection (SP1, ..., SPN) de la carte de protection (2) destinées à être connectées à l'ensemble de charges électriques (3) ; et
- un ensemble de protections électriques (P1, ..., PN), chacune des liaisons électriques (L1, ..., LN) étant équipée d'au moins l'une desdites protections électriques (P1, ..., PN),
**caractérisée en ce que** chaque liaison électrique (L1, ..., LN) de la carte de protection (2) est équipée d'au moins un point de connexion (A1, ..., AN) agencé entre la protection électrique (P1, ..., PN) et la sortie de protection (SP1, ..., SPN) de la liaison électrique (L1, ..., LN) considérée, les points de connexion (A1, ..., AN) étant aptes à être connectés électriquement entre eux de manière à relier au moins deux des sorties de protection (S1P, ..., SPN) de la carte de protection (2) entre elles.

2. Carte de protection selon la revendication 1,
**caractérisée en ce que** l'ensemble des protections électriques (P1, ..., PN) équipant l'ensemble des liaisons électriques de la carte de protection (2) sont de type statique à semi-conducteurs.

3. Carte de protection selon l'une quelconque des revendications 1 et 2, **caractérisée en ce qu'**elle comprend, en outre, un ensemble de dispositifs de sécurité (F1, ..., FN), au moins l'un des dispositifs de sécurité (F1, ..., FN) étant associé à chacune des protections électriques (P1, ..., PN), le dispositif de sécurité associé à une protection électrique étant redondant de ladite protection électrique.

4. Carte de protection selon l'une quelconque des revendications 1 à 3, **caractérisée en ce que** l'ensemble des protections électriques (P1, ..., PN) équipant l'ensemble des liaisons électriques (L1, ..., LN) de la carte de protection (2) présentent, toutes, le même calibre électrique.

5. Carte de protection selon l'une quelconque des revendications 1 à 3, **caractérisée en ce que** l'ensemble des protections électriques (P1, ..., PN) équipant l'ensemble des liaisons électriques (L1, ..., LN) de la carte de protection (2) comprennent au moins deux protections électriques présentant des calibres électriques différents.

6. Carte de protection selon l'une quelconque des revendications 1 à 5, **caractérisée en ce qu'**elle comprend au moins un circuit électronique de gestion (5) configuré pour gérer au moins une configuration de l'ensemble de protections électriques (P1, ..., PN).

7. Carte de protection selon la revendication 6,
**caractérisée en ce que** le circuit électronique de gestion (5) est destiné à être relié à un calculateur avionique (7) de l'aéronef (AC), le circuit électronique de gestion (5) étant configuré pour échanger des informations relatives à la configuration de l'ensemble de protections électriques (P1, ..., PN) avec ledit calculateur avionique (7).

8. Système d'alimentation électrique d'un ensemble de charges électriques (3) d'un aéronef (AC),
**caractérisé en ce qu'**il comprend au moins une source d'alimentation (4) électrique et au moins une carte de protection (2) selon l'une quelconque des revendications 1 à 7 configurée pour relier ladite source d'alimentation (4) électrique à l'ensemble de charges électriques (3).

9. Aéronef (AC) comprenant un ensemble de charges électriques,
**caractérisé en ce qu'**il comprend au moins un système d'alimentation (1) électrique selon la revendication 8 configuré pour alimenter l'ensemble de charges électriques (3).
